# EUROPEAN PATENT SPECIFICATION

(11) **EP 1 780 083 B1**
(45) Date of publication and mention of the grant of the patent: **07.01.2009**
(21) Application number: 06022707.1
(22) Date of filing: 31.10.2006
(51) Int. Cl.: B60R 11/02

(54) **Speaker unit and bracket for attaching speaker**
Lautsprecher und Halter zur Befestigung des Lautsprechers
Haut-parleur et support de fixation du haut-parleur

(30) Priority: 31.10.2005 JP 2005315834
(43) Date of publication of application: 02.05.2007
(73) Proprietor: Pioneer Corporation, Tokyo 153-8654 (JP); Tohoku Pioneer Corporation, Tendo-shi, Yamagata 994-8585 (JP)
(72) Inventor: Iekura, Kotaro, Tendo-shi Yamagata 994-8585 (JP)
(74) Representative: Grünecker, Kinkeldey, Stockmair & Schwanhäusser Anwaltssozietät

(56) References cited:
- DE-A1- 2 920 836
- DE-A1- 3 424 434
- JP-A- 8 289 381
- JP-A- 11 155 192
- JP-A- 2001 169 374
- JP-A- 2002 335 593
- JP-A- 2004 023 533
- US-A- 5 867 583
- US-A1- 2004 003 959

## Description

The present invention relates to a speaker unit and a bracket for attaching a speaker to a vehicle such as a motor vehicle and a vessel.

The vehicle such as the motor vehicle and vessel is equipped with a speaker to output various types of sound information, for example, refer to JP,2003-63316,A (referred to DOC-1).

The speaker unit of DOC-1 has a speaker, a bracket, and a spacer. The bracket is tube shaped and engages an outer circumference of the speaker. The spacer is tube shaped and engages an end of the bracket. The spacer and bracket are arranged coaxially.

The speaker unit of DOC-1 is attached to a board of the motor vehicle. The speaker outputs the sound information from several audio apparatuses equipped in the motor vehicle and vessel.

The speaker of DOC-1 is attached to the spacer selected from different spacers depending on a type of the motor vehicle. Accordingly, the number of the spacers increases.

Another prior art document DE 34 24 474 A1 discloses a speaker unit comprising a speaker and a bracket corresponding to the preample of claim 1 and 3.

An object of the present invention is to provide a speaker unit with a reduced number of parts and a bracket. Another object is to provide a bracket which prevents foreign material from entering thereinto and to provide a sound which does not interferes with a board.

According to the first aspect of the present invention, a speaker unit is disclosed according to claim 1.

According to a second aspect of the present invention, a bracket is disclosed according to claim 2.
FIG. 1 is an exploded perspective view of a first embodiment of a speaker unit of the present invention;
FIG. 2 is another exploded perspective view of the speaker unit of FIG. 1;
FIG. 3 is a front view of a speaker main body of the speaker unit of FIG. 1;
FIG. 4 is a side view of the speaker main body of FIG. 3;
FIG. 5 is a rear view of a bracket of the speaker unit of FIG. 1;
FIG. 6 is a sectional view taken along section VI-VI of FIG. 5;
FIG. 7 is a sectional view taken along section VII-VII of FIG. 5;
FIG. 8 is a rear view showing the speaker main body attached to the bracket of FIG. 5;
FIG. 9 is a perspective and sectional view taken along section IX-IX of FIG. 8;
FIG. 10 is a second embodiment of the present invention and a perspective view showing a speaker directly attached to another board;
FIG. 11 is a rear view of the another board of FIG. 10;
FIG. 12 is a sectional view taken along section XII-XII of FIG. 11; and
FIG. 13 is a sectional view taken along section XIII-XIII of FIG. 11.

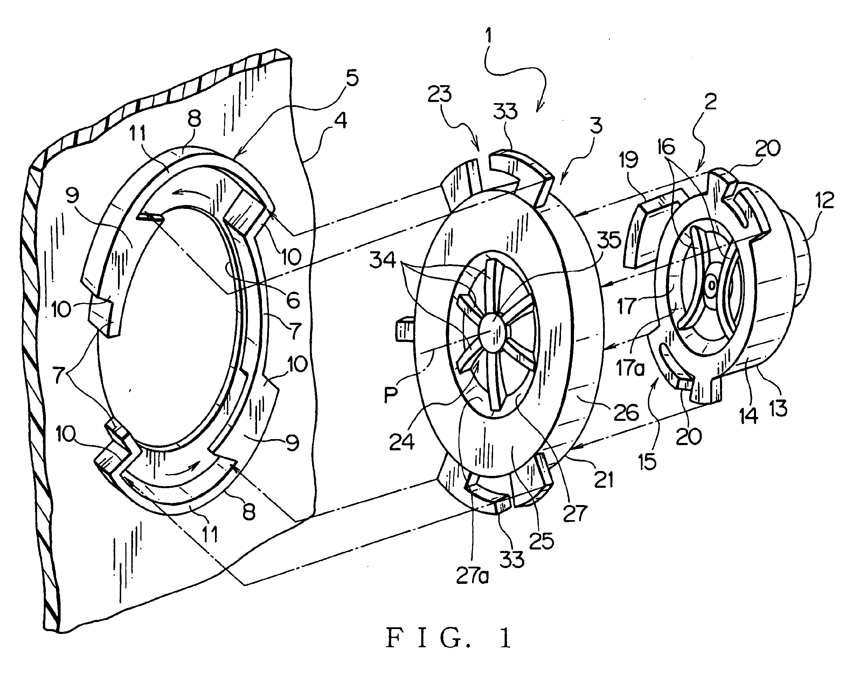

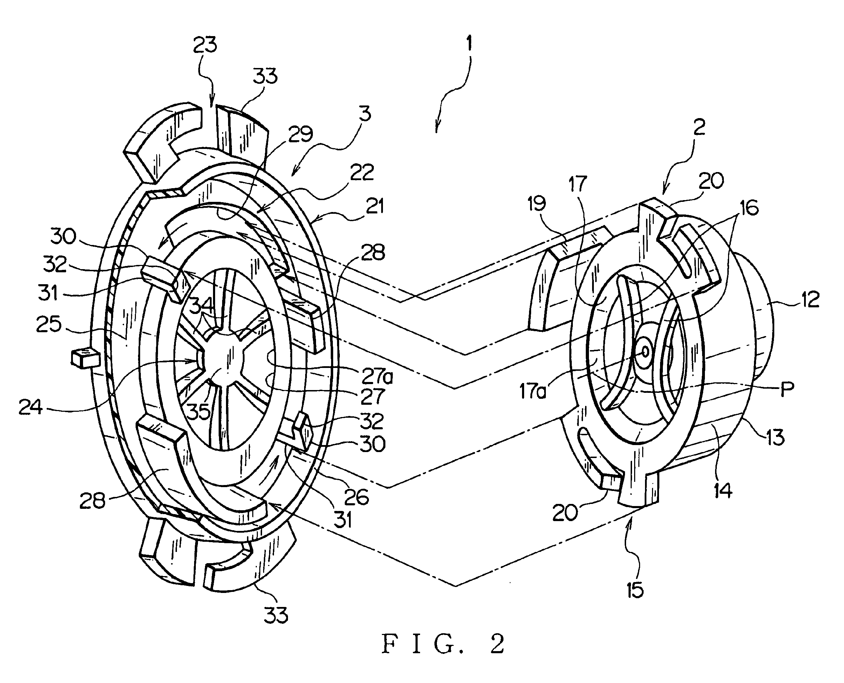

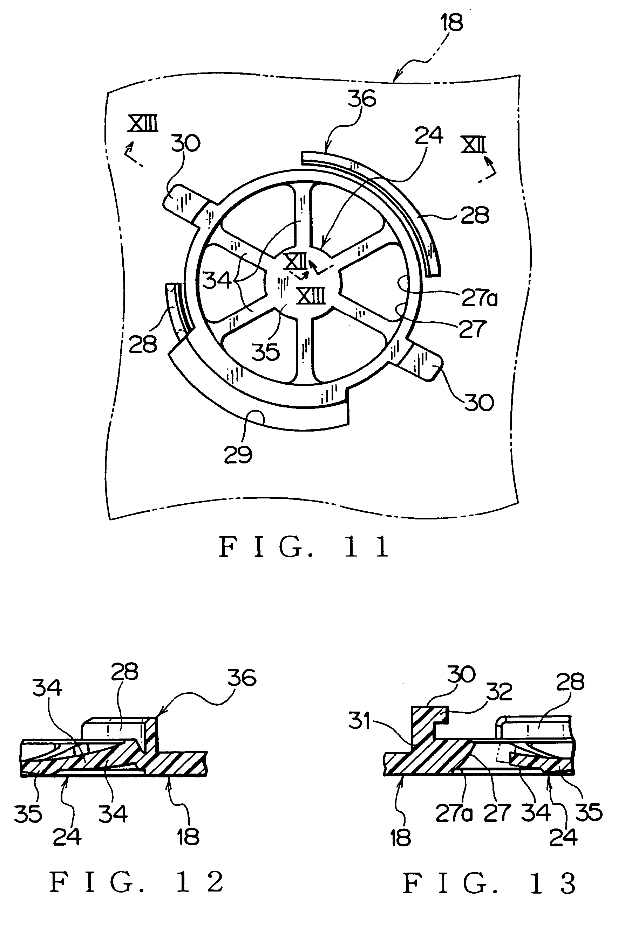

An embodiment of the present invention is explained by referring to FIGS. 1-13. Referring to FIGS. 1 and 2, a speaker unit 1 includes a speaker main body 2 and a bracket 3 for attaching the speaker main body 2. The speaker unit 1 is attached to a dashboard 4, hereafter referred to as board, of the motor vehicle, or general structure.

The board 4 is made of an insulating synthetic resin and formed in a plate shape. The board 4 has a bracket retainer 5, which has a board circular bore 6, guide walls 7, a pair of holding guide walls 8, and a pair of holding walls 9.

The board circular bore 6 is through the board 4 and has an inner diameter almost same as that of an outer diameter of a bracket main body 21. The guide walls 7 are upstanding from parts of an inner edge of the board circular bore 6 and curved along the inner edge thereof and have a radius of curvature almost same as a radius of the bracket main body 21.

Each of the holding guide walls 8 are symmetrically disposed with respect to the center of the board circular bore 7 and has a pair of outwardly extending walls 10 and a pair of arched walls 11. The pair of the outwardly extending walls 10 each are disposed separately and extending radially from edges of the guide walls 7. Each arched wall 11 is connected to edges of the pair of the outwardly extending walls 10 and has a radius of curvature almost same as that of an outer edge of a holding piece 33 of the bracket 3 described below.

Each holding wall 9 is connected to each holding guide wall 8 and symmetrically disposed about the center of the board circular bore 6. The holding walls 9 are disposed parallel to the board 4 with a distance and extending toward the center of circular bore 6. Each holding wall 9 has a half of a length of each arched wall 11 and connected to one of the guide wall 7 so as to sandwich the holding piece 33 of the bracket 3 between the board 4 and the holding wall 9 and hold the bracket 3 to the board 4.

In order to hold the speaker unit 1, the bracket main body 21 is positioned inside the guide walls 7 and the holding pieces 33 are positioned inside the holding guide walls 8 through openings near the holding walls 9. The bracket 3 is turned about an axis P to sandwich the holding pieces 33 between the holding walls 9 and the board 4. The bracket retainer 5 disposed on the board 4 holds the bracket 3, or the speaker unit 1.

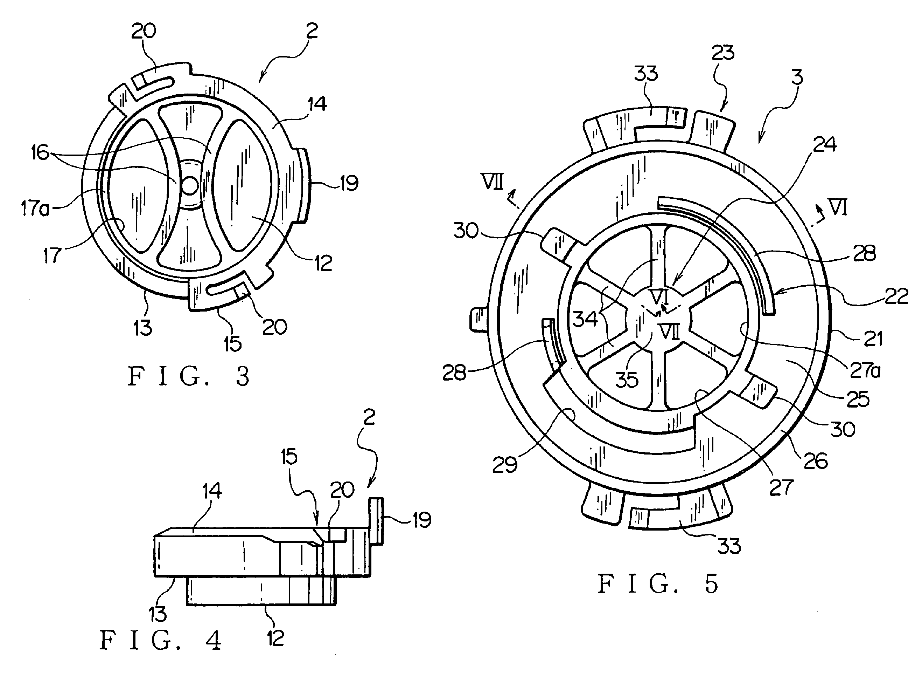

As shown in FIGS. 3 and 4, the speaker main body 2 has a speaker 12 and a speaker cover 13. The speaker 12 has a magnetic circuit and a diaphragm to generate a sound by vibrating the diaphragm with a signal current.

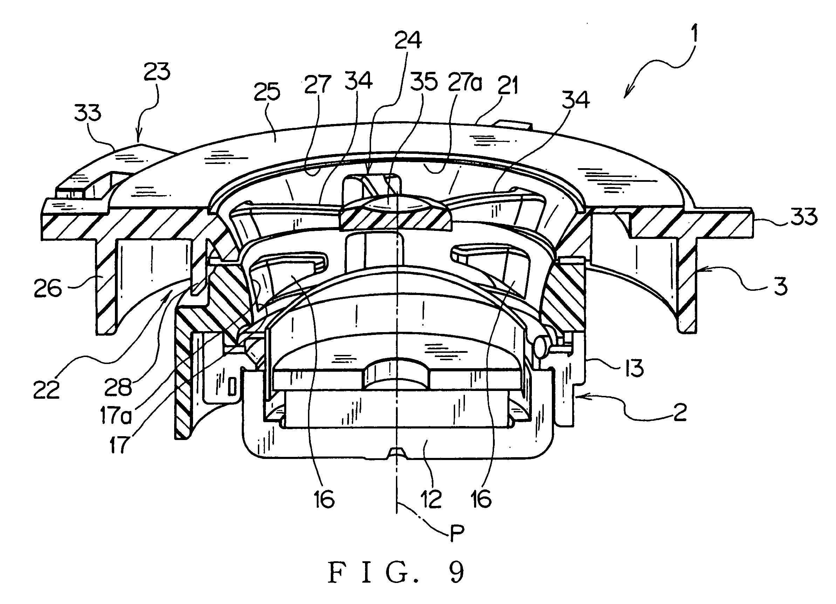

The speaker cover 13 is made of a synthetic resin and formed in an annular shape and has a cover main body 14 and a holding portion 15. The cover main body 14 engages an outer circumference of the speaker 12 and receives the speaker 12. The cover main body 14 has connecting beams 16. The connecting beams 16 connect an inner edge 17a of an opening 17 of the cover main body 14 and prevent a foreign material from entering into the cover main body 14. The inner edge 17a, as shown in FIG. 9, has a slope gradually separating away from the axis P toward an outside of the speaker cover 13, or the board 4.

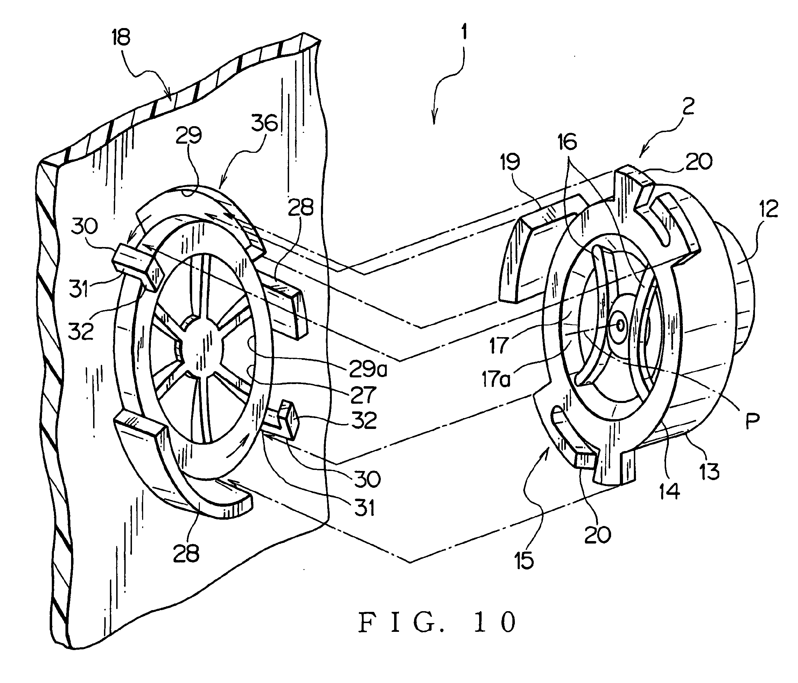

The holding portion 15 is utilized for attaching the speaker main body 2 to another dashboard 18, referred to another board, or generally one structure, shown in FIG. 10. The holding portion 15 has a speaker guide wall 19 and a pair of holding pieces 20. The speaker guide wall 19 is curved along an outer edge of the cover main body 14 and extended therefrom 14 toward the boards 4 and 18.

The pair of the holding pieces 20 are disposed on an outer circumference of the cover main body 14 and symmetrically each other about the axis P.

The bracket 3 is formed with an insulating synthetic resin and has the bracket main body 21, a speaker holder 22, an attaching portion 23, and a connecting beam portion 24. The bracket main body 21 has a circular disk 25 configulating a bottom thereof and a circumferential wall 26, which is upstanding from an outer edge of the circular disk 25 and facing to the speaker main body 2. The circular disk 25 has a circular bore 27 at the center thereof. An inner diameter of the circular bore 27 is almost same as an outer diameter of the speaker main body 2. As shown in FIG. 9, an inner edge 27a of the circular bore 27 is sloped about and away from the axis P toward the board 4. When the speaker main body 2 is attached to the bracket 3, the speaker main body 2 is exposed through the circular bore 27.

The speaker holder 22 has bracket guide walls 28, a bracket guide groove 29, and a pair of holding portions 30. The bracket guide walls 28 are upstanding from the inner edge 27a of the circular bore 27 toward the speaker main body 2 and curved along the inner edge 27a. The bracket guide groove 29 is opposed to the bracket guide wall 28 with respect to the circular bore 27 and has a recess formed in a surface of the circular disk 25 facing to the speaker main body 14. The bracket guide groove 29 is formed in an inner end portion of the circular disk 25 and curved along the inner edge 27a.

The pair of holding portions 30 are opposed each other about the circular bore 27 and have vertical segments 31 upstanding from the circular disk 25 toward the speaker main body 2 and parallel segments 32 extending inwardly from ends of the vertical segments 31. The holding portions 30 sandwich and hold the holding pieces 20 of the speaker main body 2 between the parallel segments 32 and the circular disk 25.

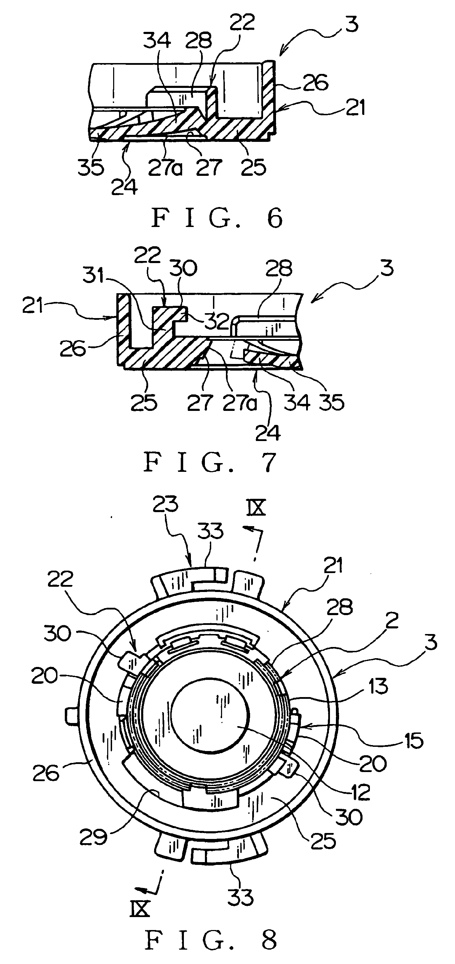

The speaker holder 22 positions the speaker main body 2 to the bracket guide walls 28 and guides the speaker guide wall 19 to the bracket guide groove 29. When the speaker main body 2 is thus rotated about the axis P, the holding pieces 20 are interposed between the parallel segments 32 and the circular disk 25 so that the holding portion 15 of the speaker main body 2 is attached to the speaker holder 22 as shown in FIGS. 8 and 9.

The attaching portion 23 has the pair of holding pieces 33 as shown in FIGS. 1, 2 and 5. The pair of holding pieces 33 are disposed symmetrically each other about the axis P and upstanding from an outer edge of the bracket main body 21 facing to the board 4 and extended along a circumference direction.

The pair of holding pieces 33 are interposed between the holding walls 9 of the bracket retainer 5 and the board 4 so that the attaching portion 23 is attached to the bracket retainer 5 or the board 4.

The connecting beam portion 24 has a plurality of straight beams 34 arranged radially with an equal angle about the axis P and a central circular disk 35 disposed at the center of the circular bore 27. The plurality of straight beams 34 connect the central circular disk 35 with the inner edge 27a of the circular bore 27. The connecting beam portion 24 prevents the foreign material from entering into the bracket 3 through the circular bore 27.

FIGS. 10-13 show a second embodiment of a speaker unit 1 to be attached_to the another board 18. The another board 18 described above has an on-board speaker holder 36 as shown in FIGS. 10-13. A configuration of the on-board speaker holder 36 is same as that of the speaker holder 22 of the bracket 3 so that like portions are provided with like reference numerals.

A speaker main body 2 of the speaker unit 1 is directly attached to the on-board speaker holder 36 with a holding portion 15 without utilizing the bracket 3.

The speaker main body 2 is attached to the board 4 with aid of the bracket 3 and is also directly attached to the another board 18. The direct attachment of the speaker main body 2 to the another board 18 reduces a number of parts of the speaker unit 1. When the speaker main body 2 can not be directly attached to the board 4, the first embodiment is effective.

Since the bracket 3 has the speaker holder 22 and the attaching portion 23, an increase of the number of parts for attaching the speaker main body 2 to the several boards 4 is prevented.

The connecting beam portion 24 prevents the foreign material from contacting the speaker main body 2 and prevents the speaker main body 2 from damaging.

The slope of the inner edge 27a of the circular bore 27 provides the sound without an interference of the board 4.

The structures of the embodiments of the present invention are intended to the dashboards 4 and 18 of the motor vehicle but not limited thereto. The speaker main body 2 can be attached to any part other than the dashboards and also to structures other than the motor vehicle.

## Claims

1. A speaker unit (1) comprising:
a speaker main body (2); and
a holding portion (15) disposed on the speaker main body (2) for attaching the speaker main body (2) to one structure (18), and
a bracket (3) having a speaker holder (22) for holding the holding portion (15) and an attaching portion (33) to be attached to another structure (4), wherein the bracket (3) includes a bracket main body (21) having a circular bore (27) and the speaker main body (2) is exposed through the circular bore (27) when the speaker main body (2) is attached to the bracket (3),
**characterized in that**
the bracket (3) has a connecting beam portion (24) connected to an inner edge (27a) of the circular bore (27), and
the inner edge (27a) of the circular bore (27) of the bracket (3) is sloped with respect to an axis (P) and away from the axis (P) toward the another structure (4).

2. A bracket (3) for attaching a speaker (2) comprising:
a speaker holder (22) for holding a holding portion (15) disposed on a speaker
main body (2);
an attaching portion (33) to be attached to another structure (4),
a bracket main body (21) having a circular bore (27), wherein the speaker main body (2) is exposed through the circular bore (27) when the speaker main body (2) is attached to the bracket (3),
**characterized in that**
the bracket main body (21) comprises a connecting beam portion (24) connected to an inner edge (27a) of the circular bore (27), and
the inner edge (27a) of the circular bore (27) of the bracket (3) is sloped with respect to an axis (P) and away from the axis (P) toward the another structure (4).

## Patentansprüche

1. Lautsprechereinheit (1), aufweisend:
einen Lautsprecherhauptkörper (2); und
einen Halteabschnitt (15), angeordnet an dem Lautsprecherhauptkörper (2) zum Verbinden des Lautsprecherhauptkörpers (2) mit einer Konstruktion (18), und
einer Halterung (3) mit einem Lautsprecherhalter (22) zum Halten des Halteabschnitts (15) und einen Verbindungsabschnitt (33), um mit einer weiteren Konstruktion (4) verbunden zu werden, wobei die Halterung (3) eine Halterhauptkörper (21) mit einer kreisförmigen Bohrung (27) enthält, und der Lautsprecherhauptkörper (2) durch die kreisförmige Bohrung (27) freigelegt wird, wenn der Lautsprecherhauptkörper (2) mit der Halterung (3) verbunden ist,
**dadurch gekennzeichnet, dass**
die Halterung einen Verbindungsträgerabschnitt (24) hat, verbunden mit einer Innenkante (27a) der kreisförmigen Bohrung (27), und
die Innenkante (27a) der kreisförmigen Bohrung (27) der Halterung (3) in Bezug auf eine Achse (P) und von der Achse (P) weg in Richtung zu der weiteren Konstruktion (4) geneigt ist.

2. Halterung (3) zum Anordnen eines Lautsprechers (2), aufweisend:
einen Lautsprecherhalter (22) zum Halten eines Halteabschnittes (15), angeordnet an einem Lautsprecherhauptkörper (2)
einen Verbindungsabschnitt (33), um mit einer weiteren Konstruktion (4) verbunden zu werden,
einen Halterhauptkörper (21) mit einer kreisförmigen Bohrung (27), wobei der Lautsprecherhauptkörper (2) durch die kreisförmige Bohrung (27) freigelegt wird, wenn der Lautsprecherhauptkörper (2) mit der Halterung (3) verbunden ist,
**dadurch gekennzeichnet, dass**
der Halterhauptkörper (21) einen Verbindungsträgerabschnitt (24) aufweist, verbunden mit einer Innenkante (27a) der kreisförmigen Bohrung (27), und
die Innenkante (27a) der kreisförmigen Bohrung (27) der Halterung (3) in Bezug auf eine Achse (P) und von der Achse (P) weg in Richtung zu der weiteren Konstruktion (4) geneigt ist.

## Revendications

1. Haut-parleur (1) comprenant :
un corps principal de haut parleur (2) ; et
une partie de maintien (15) disposée sur le corps principal de haut-parleur (2) destinée à la fixation du corps principal de haut-parleur (2) sur une structure (18), et
un support (3) comprenant une partie de maintien de haut-parleur (22) destinée à maintenir la partie de maintien (15) et une partie de fixation (33) destinée à être fixée sur une autre structure (4), dans lequel le support (3) comprend un corps principal de support (21) qui comprend un alésage circulaire (27) et le corps principal de haut-parleur (2) est à découvert au travers de l'alésage circulaire (27) lorsque le corps principal de haut-parleur (2) est fixé sur le support (3) ;
**caractérisé en ce que :**
le support (3) comprend une partie de connexion de tige (24) connectée à un bord interne (27a) de l'alésage circulaire (27) ; et
le bord interne (27a) de l'alésage circulaire (27) du support (3) est incliné par rapport à un axe (P) et en s'éloignant de l'axe (P) en direction de l'autre structure (4).

2. Support (3) destiné à la fixation d'un haut-parleur (2) comprenant :
une partie de maintien de haut parleur (22) destinée à maintenir une partie de maintien (15) disposée sur un corps principal de haut-parleur (2) ;
une partie de fixation (33) qui est destinée à être fixée sur une autre structure (4) ;
un corps principal de support (21) comprenant un alésage circulaire (27), dans lequel le corps principal de haut-parleur (2) est à découvert au travers de l'alésage circulaire (27) lorsque le corps principal de haut-parleur (2) est fixé sur le support (3)
**caractérisé en ce que :**
le corps principal de support (21) comprend une partie de connexion de tige (24) connectée à un bord interne (27a) de l'alésage circulaire (27) ; et
le bord interne (27a) de l'alésage circulaire (27) du support (3) est incliné par rapport à un axe (P) et en s'éloignant de l'axe (P) en direction de l'autre structure (4).
